# EUROPEAN PATENT SPECIFICATION

(11) **EP 2 080 719 B1**
(45) Date of publication and mention of the grant of the patent: **06.06.2012**
(21) Application number: 09000498.7
(22) Date of filing: 15.01.2009
(51) Int. Cl.: B65G 37/02, A23N 15/00

(54) **Device for processing harvested crops at processing stations**
Gerät zur Verarbeitung von Erntegut in Verarbeitungsstationen
Dispositif de traitement de récoltes moissonnées dans des postes de traitement

(30) Priority: 15.01.2008 NL 1034915
(43) Date of publication of application: 22.07.2009
(73) Proprietor: GEGE Machinebouw B.V., 5464 RA Veghel (NL)
(72) Inventor: Van Asseldonk, Johannes Maria, 5464 RA Mariaheide (NL)
(74) Representative: Dorna, Peter

(56) References cited:
- EP-A- 1 205 266
- JP-A- 61 027 821
- US-A- 2 108 869
- US-A1- 2001 002 645

## Description

The present invention relates to a device for processing harvested crops, such as leeks, at processing stations according to the preamble of claim 1

There is an increasing demand among present-day consumers for ready-made food products, such as crops. The amount of time involved in cleaning vegetables at home, for example, is considered to be Inconvenient. For that reason there is an increasing need for processing systems by means of which crops can be prepared in such a manner that eventually the consumer will only have to carry out a minimal or at least a reduced number of operations in preparing the vegetable product in question. Thus it is known to use a carrousel in the case of leeks. The device as referred to in the introduction relates to such a carrousel.

Such a carrousel generally comprises a number of levels. Typically, the leeks to be processed are continuously supplied to the second level of the carrousel via a conveyor belt, after which the leeks in question are picked up, processed (i.e. certain undesirable leaves or roots are removed from the leeks by being cut loose), in general visually inspected and, depending on the quality, placed back on the third or the fourth level of the carrousel by operators. The processed leeks are then removed from said third or fourth level and placed in containers, which may or may not take place in an automated process. Cutting waste from the leeks is discharged via the lowermost level, to which end laterally disposed partitions are provided. Positioned round the circumference of the carrousel are a number of operators. The direct surroundings of each of the operators can be regarded as a processing station.

To load the aforesaid conveyor belt, via which the leeks to be processed are supplied to the carrousel, leeks are manually taken from racks. Such racks are usually open on one longitudinal side, with an extra shelf being provided halfway the rack height. In some cases, part of the rack can be removed for taking out the leeks. From a viewpoint of labour conditions, the manual removal of leeks from the racks in question is disadvantageous, especially in the case of leeks positioned close to the ground.

Supplying the racks filled the leeks to be processed to the unloading station and discharging emptied racks from said unloading station takes place by means of fork lift trucks.

A device for sorting fruit is disclosed in US 2,108,869 according to the preamble of claim 1, and a method for processing harvested crops according to the preamble of claim 11. The device consists of a pair of fruit conveying belts disposed in side by side realtion. Baffles are used to create a number of separate compartments, one for sorting and the rest for packing the sorted fruit. Three fruit distributing belts are arranged above the conveying belts for delivering graded fruit to their respective compartment.

There are various drawbacks attached to the use of the prior art device as described above. In the first place, these drawbacks relate in particular to the fact that it is not possible to link graded leek stalks to a specific operator. In other words, it is not possible to find out afterwards which operator graded a particular leek stalk. This is disadvantageous inter alia from a viewpoint of quality inspection and quality control. After all, it is only possible to call a whole group of operators rather than a specific operator to account if the grading or processing of leeks has not been carried out correctly. In addition, there is no possibility to reward individual operators in proportion to the amount of leeks they individually processed. Another drawback of the use of a carrousel according to the prior art is that, on account of the continuous supply of leeks to be processed, there is a risk that leeks will remain present on the carrousel for a prolonged period of time, whilst new leeks continue to be deposited thereon, causing the quality of the leeks to deteriorate. It is a first object of the present invention to eliminate or at least reduce these drawbacks to a significant extent.

Furthermore, there is a risk of the leeks being crushed when a rack is being unloaded at an unloading station. It is another object of the present invention, whether or not in preferred embodiments thereof, to eliminate or at least alleviate this problem.

The supplying and discharging of racks by means of fork lift trucks is a highly labour-intensive and thus costly process. The object of the present invention, whether or not in preferred embodiments thereof, is to alleviate also these problems as well

In the light of the above objects, the device according to the invention is in the first place characterised by the characterising portion of claim 1. The device comprises a second conveyor to be driven by second drive means for transporting other crops to be processed at the processing stations past said processing stations at a second vertical level different from said first vertical level, whilst the control means are also arranged for controlling the second drive means. The use of a second conveyor according to the invention has the significant advantage that the processing of the crops to be processed can take place in batches rather than in a continuous process. The second drive means make it possible to drive the second conveyor Independently of the first conveyor It is directly noted in that regard that it is also possible within the framework of the present invention to use one and the same driving motor for driving the first conveyor as well as the second conveyor, in which case the driving motor drives either the first conveyor or the second conveyor by making use of an adjustable coupling. Alternatively it is also conceivable within the framework of the present invention, of course, to use separate driving motors for the first and the second conveyor. The advantage of this would be that in any case one conveyor can still be driven in case of failure of one of the driving motors. Eventually it is important for the present invention that the first conveyor and the second conveyor can be driven independently of each other on the basis of control signals from the control means.

Further embodiments are the subject of the dependent claims.

Preferably, the first conveyor and the second conveyor are disposed directly above each other. This makes it possible to mount the first conveyor and the second conveyor in a comparatively simple frame, whilst in addition the reaching distance of the operators at the processing stations is the same for both conveyors.

An optimum balance between the requirement to maintain a good view also of the lower conveyor of said first and second conveyors on the one hand and to realise an ergonomically advantageous situation for processing crops both on the first conveyor and the second conveyor on the other hand is obtained if said first level and said second level are between 20 and 40 cm apart.

For reasons of constructional simplicity it is furthermore preferable if the first conveyor and the second conveyor convey the crops to be processed along a rectilinear conveying path. The rectilinear conveying paths provide the additional advantage that, providing that space is available for that purpose at one end, the capacity of the device can be increased in a relatively simple manner by extending the first conveyor and the second conveyor and providing additional processing stations at the extension.

The processing stations are preferably provided only on one longitudinal side of the first conveyor and the second conveyor, so that the crops to be processed can be presented to the operators at the processing stations with their longitudinal direction (if they have such a shape) oriented transversely to the conveying direction.

Significant logistic advantages are obtained if the device is provided with a discharge conveyor extending parallel to the first conveyor and the second conveyor for discharging crops processed at the processing stations, in particular if the processing stations are provided between the first conveyor and the second conveyor on the one hand and the discharge conveyor on the other hand.

According to an important preferred embodiment, first sensor means and second sensor means are provided for detecting the presence of harvested crops to be processed on the first conveyor and the second conveyor, respectively, at the location of the processing stations. The first sensor means and the second sensor means make it possible to determine whether any crops to be processed are still present on a conveyor. As soon as it appears from the detections made by the first sensor means or the second sensor means that all crops to be processed have been processed, in other words, that the conveyor in question is empty, said conveyor is ready for being loaded with a next batch of crops to be processed, during which loading operation crops to be processed that are present on the other conveyor can be processed by the operators at the processing stations. The operators can thus keep working continuously.

In order to have these processes take place in an automated manner, it is preferable if the control means are arranged for controlling the first drive means and the second drive means on the basis of detections made by the first sensor means and the second sensor means.

The first sensor means and/or the second sensor means preferably comprise radiation means for emitting a light beam in a longitudinal direction of the conveyor in question, just above a load-bearing surface of said conveyor. If the beam is interrupted, this is an indication that crops to be processed are still present on the conveyor in question, and that said conveyor is not ready yet for being loaded with a next batch.

Significant advantages are obtained if each processing station comprises at least one collecting location for collecting processed crops at that location, since this makes it possible to individualise operations at each of the processing stations, so that it is possible at a later point in time to trace the processing station at which a product was processed.

Weighing means are provided, preferably near each collecting location and at least near at least some of the collecting locations, for weighing processed crops collected at the respective collecting location(s). This provides a possibility of rewarding personnel working at a collecting location in dependence on the amount of crops that have been processed. To save costs, it is conceivable within the framework of the present preferred embodiment not to provide weighing means, such as a weighing platform, for each collecting location but to provide a weighing platform for each processing station or for a group of processing stations, for example two neighbouring processing stations.

Each processing station preferably comprises at least two collecting locations for grading processed crops into at least two classes in collecting containers. Thus, the grading activities of the operator at the processing station in question can be individualised and be recognised downstream in the production process, which provides significant advantages with a view to instructing operators in a more specific manner.

Preferably, a working position for a human operator is provided between said at least two collecting locations associated with a processing station.

Another improvement can be realised in that each processing station is provided with a discharge chute for discharging waste in downward direction. In this way the operator is provided with means for keeping the working environment clear of waste.

With a view to processing said waste it is preferable if a waste discharge conveyor for discharging waste is provided at downstream ends of a number of discharge chutes for a number of processing stations, in which case the waste discharge conveyor is furthermore preferably located at a level lower than the floor on which a human operator is standing at a working position associated with the processing stations in question. In order to achieve this, it is for example conceivable that the operators stand on a platform, under which platform the waste discharge conveyor extends.

For the purpose of loading the first conveyor or the second conveyor, supply means are preferably provided for supplying harvested crops to be processed to the first conveyor or the second conveyor. Using said supply means, the loading of the first conveyor and the second conveyor can take place in a properly metered manner, so that the crops to be processed will be evenly divided over the first conveyor or the second conveyor.

Said supply means preferably comprise switch means which connect to the first conveyor in a first position and to the second conveyor in a second position. Parts of the supply means that are provided upstream of said switch means can thus be configured for joint use by the first conveyor and the second conveyor.

In particular with a view to achieving a high processing capacity, it is advantageous if the supply means comprise a supply conveying system for supplying containers filled with the harvested crops to be processed to an unloading station, as well as a transfer conveyor for transporting crops to be processed that have been removed from the containers at said unloading station from the unloading station to the first conveyor or to the second conveyor. Once a container filled with crops to be processed has been supplied to an unloading station by means of the supply system, the supply conveying system can be used for supplying a next filled container to another unloading station or, as will become clear yet hereinafter, removing an empty container from an unloading station.

In order to reduce the required amount of human labour, the device is preferably provided with cutting means for cutting off parts from the crops to be processed in advance during transport thereof by the transfer conveyor.

According to a very important preferred embodiment, the unloading station comprises lifting means for moving a bottom of the container up and down relative to vertical walls of the container. Moving a container bottom up and down via the lifting means obviates the need to tilt such a container. The crops to be processed can be simply removed from the container from an open upper side of the container and be placed on the transfer conveyor.

In order to be able to carry out these operations under ergonomically optimum conditions, it is furthermore preferable if the unloading station comprises third sensor means for detecting the presence of crops to be processed in a container, in which case the control means are arranged for controlling the lifting means on the basis of detections made by the third sensor means. The use of the third sensor means provides the significant advantage that the crops to be processed are continuously maintained at the same vertical level in the container, so that the operator who is removing the crops to be processed from the container will remove the crops to be processed from the container at the same vertical level, irrespective of whether the container is still full or nearly empty.

The bottom is preferably oriented at an angle in that case, so that some compensation is offered for the slightly conical shape of certain crops, such as leeks.

For constructional reasons it is preferable in that case if the bottom is freely supported in a lowermost position thereof on points of support connected to vertical walls of the container, wherein the bottom can be moved up from said lowermost position relative to the vertical walls by the lifting means and/or wherein the lifting means comprise a scissor mechanism.

With a view to increasing the production capacity, it is preferable if the supply conveying system is arranged for supplying containers filled with crops to be processed to various unloading stations, in which case the supply conveying system advantageously comprises a vehicle which can move forward and backward along a path of movement past a number of unloading stations.

Said vehicle preferably comprises transfer means for transferring a container with crops to be processed to an unloading station. The amount of human labour required for transferring a container to an unloading station can thus be reduced as much as possible.

It is furthermore advantageous in that regard if the transfer means are also arranged for receiving a container that has been emptied at an unloading station.

With a view to further reducing the amount of human labour involved in the logistic process, the device furthermore preferably comprises a container discharge conveyor for discharging containers emptied at an unloading station.

The vehicle can be of relatively simple construction in that case if the aforesaid path of movement extends between a number of unloading stations on the one hand and the container discharge conveyor on the other hand, whilst the transfer means are also arranged for transferring a container emptied at an unloading station to the container discharge conveyor, whilst furthermore preferably the container discharge conveyor extends parallel to said path of movement.

In order to further optimise the logistic process, it is advantageous if the supply conveying system comprises a container supply conveyor for supplying containers filled with the crops to be processed to the vehicle, whilst the transfer means are also arranged for receiving a container filled with harvested crops to be processed by the vehicle from the container supply conveyor, whilst furthermore preferably a number of discharge stations are located in line with the container supply conveyor.

The present invention also relates to a method for processing harvested crops, such as leeks, at processing stations, for example by using a device according to the preamble of claim 12.

The method according to the present invention is characterised by the characterising portion of claim 12.

The advantages to be obtained by using such a method have already been elucidated in the foregoing in the explanation of the device according to the invention.

The continuity of the production process can be ensured in particular if the transportation of the crops to be processed is carried out by means of the first conveyor according to step A while the other crops to be processed, which are presented to said number of processing stations by means of the second conveyor according to step B, are being processed at said number of processing stations, and the transportation of the other crops to be processed is carried out by means of the second conveyor according to step B while the crops to be processed, which are presented to said number of processing stations by means of the first conveyor according to step A, are being processed at said number of processing stations.

A quiet working environment in particular for the personnel at the processing stations is in that case provided if the processing of crops at said number of processing stations takes place while the conveyor on which the crops to be processed are presented to said number of processing stations is stationary, with the important additional advantage that it is in principle possible to present crops of the same composition to each of the processing stations.

As already explained before, it is preferable if alternately all the crops on the first conveyor and all the crops on the second conveyor are processed at said number of processing stations and the collecting of processed crops in a collecting container takes place at each of the processing stations.

Advantageously, processed crops are graded into at least two classes at each of the processing stations, with separate collecting containers being used for each of said classes.

Furthermore preferably, the method comprises the step of providing the collecting containers with a label carrying machine-readable information at least relating to the class of the crops present in the container and/or the human operator who filled the collecting container with processed crops. In the latter case, the labels provide a possibility of tracing grading operations back to the person who carried out the collecting containers with a label carrying machine-readable information at least relating to the class of the crops present in the container and/or the human operator who filled the collecting container with processed crops. In the latter case, the labels provide a possibility of tracing grading operations back to the person who carried out specific operations.

The advantages of this become manifest in particular if the method further comprises the discharging of collecting containers that were filled at a number of processing stations by a discharging conveyor, wherein information on the labels is read by an automated reader during transport by the discharge conveyor, which information is stored.

In order to make it possible to supply different amounts of crops to be processed to the various processing stations, it is preferable if the method according to the invention comprises the step of driving the first conveyor and the second conveyor, respectively, or a supply conveyor connecting to the first conveyor or the second conveyor at an upstream location, onto which crops to be processed are loaded, at a varying speed while crops to be processed are being transported by means of the first conveyor and the second conveyor, respectively. In the case of an identical loading speed of the first conveyor or the second conveyor or of a supply conveyor connecting the two parts an upstream location, a varying speed will result in different amounts of crops to be processed being delivered at the various processing stations. A reason for this might be the circumstance that not all the operators at the various processing stations process the crops at the same speed. Thus, a comparatively slow operator might be the determining factor as regards the capacity that can be realised with the device according to the invention. The present preferred embodiment prevents situations in which operators temporarily do not have any crops to be processed available to them.

The invention, does not relate to a container for use in a device according to a preferred embodiment of the invention as described in the foregoing, comprising vertical walls and a bottom, wherein said bottom is freely supported in the lowermost position thereof on points of support connected to the vertical walls, and wherein said bottom can be moved up from the lowermost position relative to the vertical walls by lifting means.

The invention will be explained in more detail below by means of a description of a preferred embodiment of the invention, in which reference is made to the following figures:
Figure 1 is a top plan view of a preferred embodiment of a device according to the invention;
Figure 2 is a front view of a processing line;
Figures 3 and 4 are a front view and a side view, respectively, of a processing station;
Figure 5 is a more detailed side view of the environment of an unloading station as also shown in figure 2;
Figures 6a and 6b are two perpendicular views of a container present at an unloading station, in an uppermost position thereof;
Figures 7a and 7b are two perpendicular views of a container present at an unloading station, in a lowermost position thereof;
Figure 8 shows a vehicle for a container as forming part of the device according to the invention.

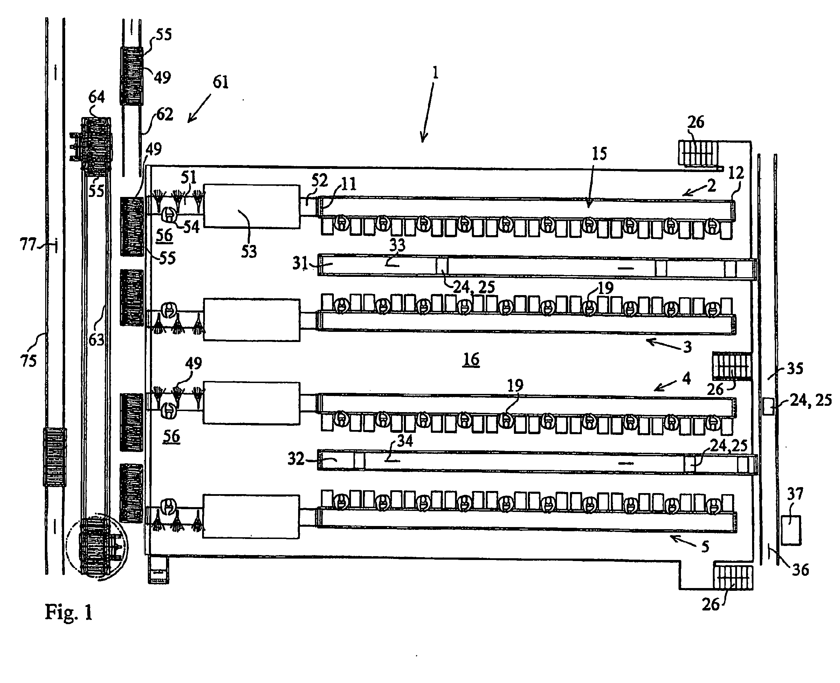

Figure 1 schematically shows in top plan view a device 1 for processing harvested leeks 49. The device 1 comprises four processing lines 2 - 5. A common platform 16 is provided for said four processing lines 2 - 5, which platform extends above the floor 17 of the space in which the processing device 1 is disposed, spaced therefrom by a distance 44 of about 1.2 m. The platform 16 can be reached from the floor 17 via stairs 26.

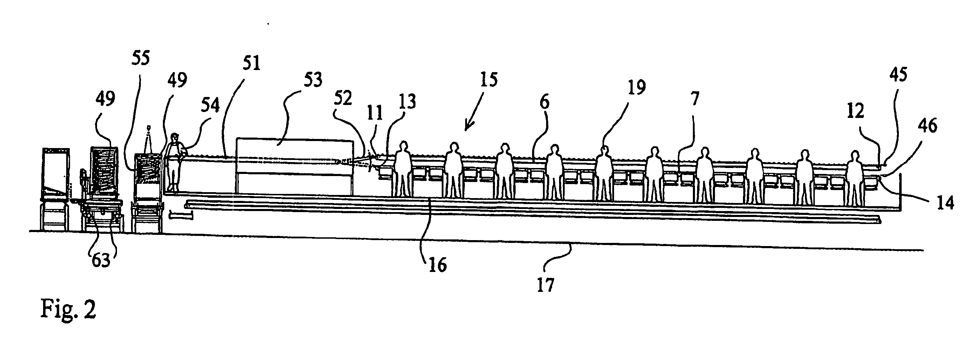

Each processing line comprises two belt conveyors 6, 7 disposed directly above each other (see also figures 2-4). The vertical spacing 8 between the belt conveyors 6 and 7 is about 30 cm. Each of the belt conveyors 6, 7 comprises an endless conveyor belt 9, 10, which conveyor belts are passed over pulleys 11-14 at the ends of the respective belt conveyors 6, 7. One of the associated pulleys 11-14 of each of the belt conveyors 6, 7 is driven via a driving motor (not shown) and a transmission on the basis of control signals from a control system (not shown), which may comprise a PLC control unit, for example.

Sensors 45, 46 are provided at the downstream ends of the belt conveyors 6, 7, which sensors emit a light beam 47, 48 in horizontal direction directly above the upper part of the respective conveyor belts 9, 10. The detection of a possible interruption of the light beams 47, 48 is an indication that leeks 49 to be processed are present on the belt conveyor 6, 7 in question.

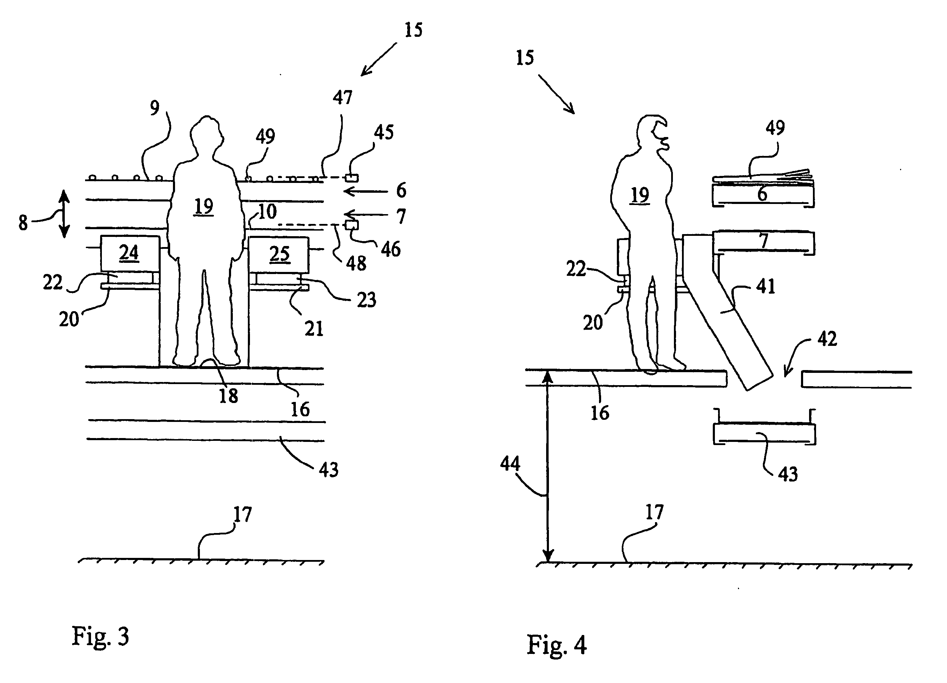

Ten processing stations 15 are provided on one longitudinal side of each of the processing lines 2-5. Figures 3 and 4 show such a processing station in more detail in two views oriented perpendicularly to each other. Each processing station 15 comprises a position 18 on the platform 16 for a human operator 19. The processing stations 15 associated with the processing lines 2 and 3 are provided on the facing longitudinal sides of the respective processing lines 2, 3, so that the operators 19 of the two processing lines 2, 3 are positioned with their backs turned towards each other. The same situation occurs for the processing lines 4, 5. A table 20, 21 fitted with a weighing platform 22, 23 is provided to the left and to the right of the operator 19, as far as said operator faces towards the belt conveyors 6, 7. Disposed on said weighing platforms are crates 24, 25, which are to be filled with processed leeks by an operator 19.

Directly in front of the operator 19, a chute 41 is provided for each processing station 15, the lower end of which chute extends through an opening 42 in the platform 16. The upper side of the chute 41 is located between the belt conveyor 7 and the operator 19, whilst the chute 41 terminates with its lower end above a discharge conveyor 43, which is disposed directly below the belt conveyors 6 and 7 and, in contrast to the belt conveyors 6 and 7, under the platform 16.

Disposed between the processing lines 2 and 3, and also between the processing lines 4 and 5, is a discharge conveyor 31, 32 for discharging filled crates 24, 25 in the direction indicated by the arrows 33, 34. Roller conveyors (not shown) are provided under the discharge conveyors 31, 32, via which roller conveyors empty crates are supplied. When a filled crate 24, 25 is placed on one of the discharge conveyors 31, 32, an empty crate is directly removed from the roller conveyor disposed therebelow.

A collecting conveyor 35 extending transversely to the discharge conveyors 31, 32 is provided at the downstream ends of the discharge conveyors 31, 32 for further discharging filled crates 24, 25 in the direction indicated by the arrow 36. Disposed beside the collecting container 35, downstream of the discharge conveyor 32, is an automated reading device 37, by means of which information, for example in the form of a bar code present on labels affixed to filled crates 24, 25, can be read.

A supply conveyor 51 is provided upstream of each of the processing lines 2-5. Provided at the downstream end of the supply conveyor 51 is a switch conveyor 52, whose upstream end connects to the downstream end of the supply conveyor 51, and whose downstream end connects to the upper belt conveyor 6 in a first position (full lines in figure 2) and to the lower belt conveyor 7 in a second position (broken lines in figure 2). The downstream part of the supply conveyor 51 passes through a pre-processing device 53, also called "leek peeler", which is known per se to those skilled in the art and which already cuts the leeks 49 to length, for example, inter alia by cutting off the roots. Present at the upstream end of each supply conveyor 51 is a human transfer operator 54, who takes leek chalks 49 from a rack 55 and places them in the same orientation on the upstream end of the supply conveyor 51. The environment of the transfer operator 54 is referred to as "transfer station", which is indicated by numeral 56.

The device as described so far operates as follows:
The transfer operator 54 takes leeks 49 to be processed from a rack 55 at a transfer station 56 and places said leeks 49 on the upstream end of the supply conveyor 51 associated with the transfer station 56 in question. The supply conveyor 51 is driven by drive means (not shown), so that the leeks 49 are transported in the direction of the switch conveyor 52. During said transport, the leeks 49 pass the leek peeler 53, by which the leeks 49 are slightly pre-processed in an automated manner, for example in that they are cut to length. The transportation of leeks on the supply conveyor 51 continues until the supply conveyor 51 is filled with leeks 49 along its entire length.

Starting from the (initial) situation that no leeks to be processed are present on the upper conveyor 6 (and on the lower conveyor 7), which can be detected by means of the sensor 45, the switch conveyor 52 is moved to the upper position, after which the belt conveyor 6 is completely filled with leeks 49 to be processed via the switch conveyor 52, whilst the supply conveyor 51, the switch conveyor 52 and the belt conveyor 6 are driven simultaneously therewith, of course. The transfer operator 52 sees to it that the supply conveyor 51 remains filled. Once the belt conveyor 6 is completely filled, or at least along that part of the length of the belt conveyor 6 where operators 19 are present at processing stations 15, the drive of the belt conveyor 6, but also of the supply conveyor 51 and the switch conveyor 52, is stopped. From that moment the leeks present on the belt conveyor 6 are available for being processed by the operators 19 along the belt conveyor 6 in question. While these operations are being carried out on the leeks 49 present on the belt conveyor 6, the lower belt conveyor 7 is filled in the same manner as the upper belt conveyor 6 previously, with this understanding that the switch conveyor 52 has assumed its lower position for this purpose. The belt conveyor 7, too, is thus completely filled, or at least along that part of the length of the belt conveyor 6 where operators 19 are present.

In case not all the operators are able to process leeks 49 at the same speed it may be advantageous to drive the supply conveyor 51 at a varying speed while the belt conveyor 6 or 7 is being filled, in such a manner that a comparatively small amount of leeks 49 is delivered to a processing stations 15 of a comparatively slow operator 19, whilst a comparatively large amount of leeks 49 is delivered at the processing stations 15 of a comparatively fast operator 19. Alternatively it is also possible to drive the supply conveyor 51 at a fixed speed while the belt conveyor 6 or 7 is being filled and to drive the belt conveyor 6 or 7 at a varying speed. This alternative may result in the belt conveyors 6 or 7 being filled more quickly.

While the leeks 49 are being processed by operators 19, parts thereof, such as leaves, are cut or pulled off therefrom. Said parts are waste products, which are deposited in the discharge chute 41 by the operator, whereupon said waste is discharged by means of the discharge conveyor 43. After having processed a leak stalk 49, the operator 19 inspects the leek stalk 49 in question and classifies it into class I or class II. Class I leeks are placed in the crate 24, whilst class II leeks are placed in the crate 25. The crates 24, 25 are thus filled at the location of each of the processing stations 15 until it is determined by means of the weighing platforms 22, 23 that the leek-filled crate 24, 25 in question has reached a predetermined weight, for example ten kilograms. It is for example conceivable for the weighing platforms 23, 24 in question to deliver an acoustic signal to the operator 19 to indicate this. The operator will subsequently remove the crates 24, 25 in question from the weighing platform 22, 23 and place it on the associated discharge conveyor 31, 32 behind him/her. It should be noted in that connection that each of the crates 24, 25 is provided with a label carrying information which on the one hand indicates the grading class of the leeks present in the respective crate 24, 25 and which on the other hand identifies the operator 24, 25 who filled the crate 24, 25 in question. The information that can be read from the labels may also relate to the variety, the parcel, the grower and the customer for the leeks in question.

All the filled crates 24, 25 are transported past the reading device 37 via collecting conveyors 35, during which transportation the labels are read by the reading device 37. If desired, the crates may be weighed again at that location for verification. Information concerning the productivity of each individual operator 19 is collected by means of the reading device 37, so that it becomes possible to reward each operator 19 financially or otherwise in dependence on his/her productivity. In addition to that there is a possibility to assess visually whether the leeks in the crates 24, 25 have been correctly classified by an operator 19. If that is not the case for a particular crate 24, 25, the operator 19 in question can be traced and possibly be called to account for incorrectly classifying leeks.

Once all the leeks present on the upper conveyor 6 have been processed, which is detected by means of the sensor 45, the operators 19 start processing leeks present on the lower conveyor 7, which has been completely filled in the meantime. Simultaneously therewith, the upper conveyor 6 is filled with leeks 49 again, whilst the switch conveyor 52 is rotated back to the upper position, of course. This process continues to repeat itself.

The device 1 further comprises a supply conveying system 61, of which inter alia the previously described supply conveyors 51 and the exchange conveyors 52 form part. Racks 55 are used in the supply conveying system 61. Leeks 49 are supplied in such a rack 55 by means of the rack supply conveyor 62. Racks 55 present at the various transfer stations 56 are located in line with the supply conveyor 62.

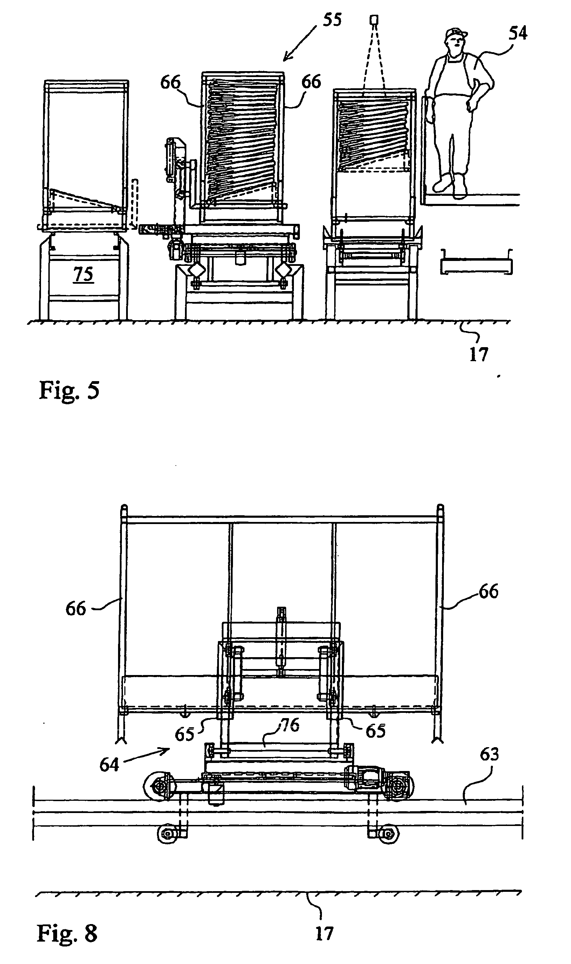

The supply conveying system 61 further comprises rails 63, along which a trolley 64 (see also figure 8) can be moved forward and backward past the four transfer stations 56 in the direction perpendicular to the longitudinal directions of the respective processing lines 2-5. The trolley 64 comprises two parallel lifting arms 65, by means of which a rack 55 can be lifted and put down. The lifting arms are extensible in their longitudinal direction to within the reach of the supply conveyor 62 or one of the transfer stations, depending on the position of the trolley 64 on the rails 63. The extensibility of the lifting arms 65 makes it possible to pick up a rack 55 filled with leeks 49 from the supply conveyor 62, insofar as such a rack 55 is located at an end of the supply conveyor 62 that faces towards the transfer stations 56. After a rack 55 has been picked up from the supply conveyor 62 by means of the lifting arms 65 and the lifting arms 65 have subsequently been retracted, the trolley 64 is transported along the rails 63 to a position opposite one of the four transfer stations 56 where, in contrast to the situation shown in figure 1, no rack 55 is present at that moment. By subsequently extending and lowering the lifting arms 65 again, the rack 55 in question can be put down at a transfer stations 56.

The racks 55 each comprise a three-dimensional rectangular frame. Vertical walls are provided between the columns 66 of the frame in the corners of the rack 55. The columns 66 are interconnected by means of four horizontal members 67. In a lowermost position, a bottom 68 having a slightly inclined support surface 69 for the leeks 49 to be processed is supported on points of support 81 connected to said horizontal members 67.

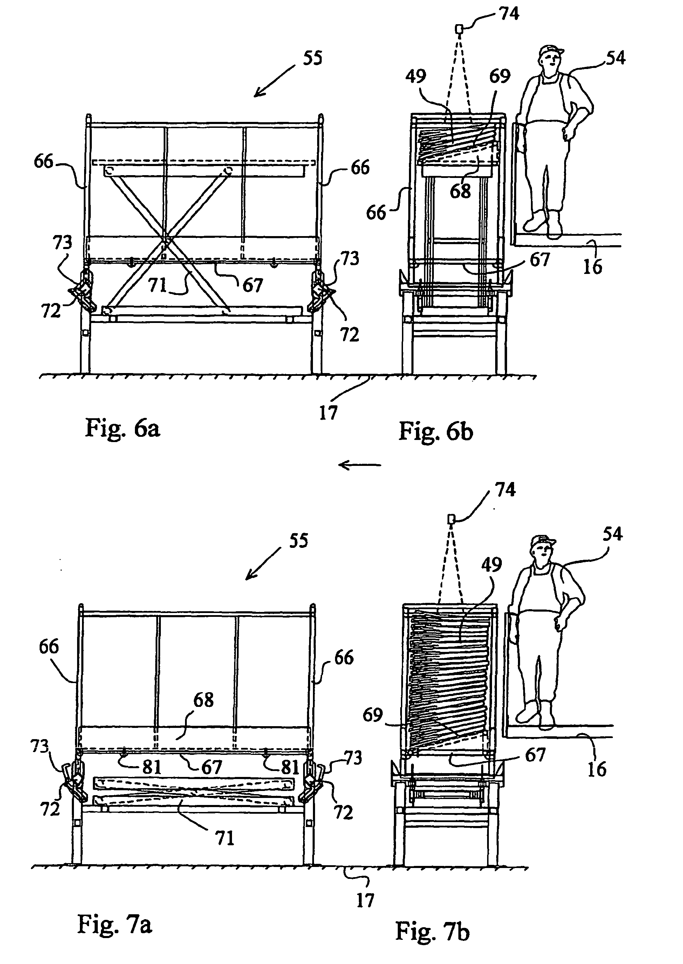

A scissor mechanism 71 is provided at each transfer station 56. Each rack 55 that is placed at a transfer station 56 by means of the trolley 64 is so positioned that the scissor mechanism 71 will be disposed under the bottom 68 of the rack 55 in question. This situation is shown in figures 7a and 7b. The rack 55 is supported via the undersides of the columns 66 on support sleeves 72 associated with the transfer station 56 in question. Said position can be locked by means of hooks 73.

When the supply conveyor 51 is being loaded by the transfer operator 54, with the leeks 49 to be processed being taken from a rack 55 at the location of a transfer station 56 via the open up side of the rack 55, the upper level of the leeks 49 in the rack 55 will exhibit a tendency to drop. This would mean that the transfer operator 54 would have to reach deeper and deeper into the rack 55. The scissor mechanism 71, however, makes it possible to keep the upper level of the leeks 49 in the rack 55 constant, with the scissor mechanism 71 slowly extending from the situation shown in figures 7a and 7b to the situation shown in figures 6a and 6b, so that the bottom 68 will move up along with the scissor mechanism 71. In principle, the transfer operator 54 could operate the scissor mechanism 71, but it will be more advantageous to use a distance sensor 74 directly above the rack 55 at a transfer station, which distance sensor continuously determines the distance between the sensor 74 and the leeks 49 in the rack 55 in question. As soon as said distance exceeds a predetermined desired value, the distance sensor 74 will deliver a signal to the control system, which in its turn will deliver a control signal to the driving unit for the scissor mechanism 71, so that said scissor mechanism will lift the bottom 68 slightly further until the desired distance between the sensor 74 and the leeks 49 is reached again. Once a rack 55 is completely empty, the scissor mechanism 71 will retract again to the position shown in figures 7a and 7b, after which the rack 55 can be removed from the respective transfer station 56 by means of the trolley 64.

A discharge conveyor 75 is provided for discharging empty racks, which discharge conveyor is comparable as regards its construction with the supply conveyor 62, but which is disposed on the opposite side of the rails 63. In order to be able to reach the discharge conveyor 75, each trolley 64 is provided with a turntable 76, by means of which the lifting arms 65 supporting an empty rack 55 can be rotated through an angle of 180 degrees about a vertical axis of rotation through the centre of the trolley 64. By extending and moving down the lifting arms 65 after such a rotation, an empty rack 55 is transferred to the discharge conveyor 75, which discharges the empty racks 55 in the direction indicated by the arrow 77, so that said rack can be filled with leeks again and be supplied again by means of the supply conveyor 62.

## Claims

1. A device (1) for processing harvested crops, such as leeks (49), at processing stations (15) for human operators, said device comprising a number of processing stations, a first conveyor (6, 7) to be driven by first drive means for transporting crops to be processed by the operators at said processing stations past said processing stations at a first vertical level, and control means for controlling said first drive means, wherein the device further comprises a second conveyor (6, 7) to be driven by second drive means for transporting other crops to be processed at the processing stations past said processing stations at a second vertical level different from said first vertical level, whilst the control means are also arranged for controlling the second drive means wherein the control means are arranged for alternately driving and stopping the first drive means and the second drive means, **characterised in that** first sensor means and second sensor means are provided for detecting the presence of harvested crops to be processed on the first conveyor and the second conveyor, respectively, at the location of the processing stations, wherein the control means are arranged for stopping the first conveyor (6,7) when the crops to be processed are at the number of processing stations (15) for allowing processing of the crops to be processed at the processing stations (15) while the first conveyor (6,7) is stationary.

2. A device according to claim 1, **characterised in that** the control means are arranged for stopping the second conveyor (6,7) when the other crops to be processed are at the processing stations (15) for allowing processing of the other crops to be processed at the processing stations while the second conveyor is stationary.

3. A device according to any one of the preceding claims, **characterised in that** said first conveyor and said second conveyor are disposed directly above each other.

4. A device according to any one of the preceding claims, **characterised in that** the processing stations are provided only on one longitudinal side of the first conveyor and the second conveyor.

5. A device according to any one of the preceding claims, **characterised in that** the device is provided with a discharge conveyor (31, 32) extending parallel to the first conveyor and the second conveyor for discharging crops processed at the processing stations. presence of harvested crops to be processed on the first conveyor and the second conveyor, respectively, at the location of the processing stations,

6. A device according to any one of the preceding claims, **characterised in that** each processing station comprises at least one collecting location (35) for collecting processed crops at that location.

7. A device according to claim 6, **characterised in that** weighing means are provided near at least some of the collecting locations and preferably near each collecting location for weighing processed crops collected at the respective collecting location.

8. A device according to any one of the preceding claims, **characterised in that** each processing station is provided with a discharge chute for discharging waste in downward direction.

9. A device according to any one of the preceding claims, **characterised in that** supply means (51) are provided for supplying harvested crops to be processed to the first conveyor or the second conveyor.

10. A device according to claim 9, **characterised in that** said supply means comprising switch means (52) which connect to the first conveyor (6, 7) in a first position and to the second conveyor (6, 7) in a second position.

11. A method for processing harvested crops, such as leeks, at processing stations (15), for example by using a device according to any one of the preceding claims, comprising the steps of
A transporting the crops to be processed past a number of processing stations (15) at a first vertical level and presenting said crops to be processed to said stations by means of a first conveyor (6, 7),
B transporting other crops to be processed past said number of processing stations at a second vertical level different from said first vertical level and presenting said other crops to be processed to said stations by means of a second conveyor,
wherein the transportation of the crops to be processed is carried out by means of the first conveyor (6, 7) according to step A while the other crops to be processed, which are presented to said number of processing stations by means of the second conveyor (6, 7) according to step B, are being processed at said number of processing stations (15), and In that the transportation of the other crops to be processed is carried out by means of the second conveyor (6, 7) according to step B while the crops to be processed, which are presented to said number of processing stations by means of the first conveyor (6, 7) according to step A, are being processed at said number of processing stations,
**characterised in that** the processing of crops at said number of processing stations (15) takes place while the conveyor (6, 7) on which the crops to be processed are presented to said number of processing stations is stationary.

12. A method according to claim 11 **characterised in that** alternately all the crops on the first conveyor (6, 7) and all the crops on the second conveyor (6, 7) are processed at said number of processing stations (15).

13. A method according to any one of claims 11 or 12, **characterised by** collecting processed crops in a collecting container (35) at each of the processing stations and providing the collecting containers with a label carrying machine-readable information at least relating to the class of the crops present in the container and/or the human operator who filled the collecting container with processed crops.

14. A method according to claim 13 **characterised by** discharging collecting containers (35) that were filled at a number of processing stations (15) by a discharging conveyor (32), wherein information on the labels is read by an automated reader during transport by the discharge conveyor, which information is stored.

## Patentansprüche

1. Vorrichtung (1) zum Verarbeiten von geernteten Feldfrüchten, wie z.B. Lauch (49), an Verarbeitungsstationen (15) für Bedienpersonen, wobei die Vorrichtung mehrere Verarbeitungsstationen, ein erstes, durch eine erste Antriebsvorrichtung anzutreibendes Förderband (6, 7), um von den Bedienern an den Verarbeitungsstationen zu verarbeitende Feldfrüchte auf einer ersten vertikalen Höhenlage an den Verarbeitungsstationen vorbei zu transportieren, und Steuereinrichtungen zum Steuern der ersten Antriebsvorrichtung umfasst, wobei die Vorrichtung darüber hinaus ein zweites Förderband (6, 7) umfasst, das durch eine zweite Antriebsvorrichtung anzutreiben ist, um andere an den Verarbeitungsstationen zu verarbeitende Feldfrüchte auf einer zweiten vertikalen Höhenlage an den Verarbeitungsstationen vorbei zu transportieren, die sich von der ersten vertikalen Höhenlage unterscheidet, während die Steuereinrichtungen auch dazu eingerichtet sind, die zweite Antriebsvorrichtung zu steuern, **dadurch gekennzeichnet, dass** erste Sensoreinrichtungen und zweite Sensoreinrichtungen vorgesehen sind, um das Vorhandensein von geernteten, auf dem ersten bzw. zweiten Förderband zu verarbeitenden Feldfrüchten am Ort der Verarbeitungsstationen zu erfassen, wobei die Steuereinrichtungen so angeordnet sind, dass sie die erste Antriebsvorrichtung und die zweite Antriebsvorrichtung abwechselnd antreiben und anhalten, wobei die Steuereinrichtungen dazu eingerichtet sind, das erste Förderband (6, 7) anzuhalten, wenn sich die zu verarbeitenden Feldfrüchte an den mehreren Verarbeitungsstationen (15) befinden, um zu ermöglichen, dass die zu verarbeitenden Feldfrüchte an den Verarbeitungsstationen (15) verarbeitet werden, während das erste Förderband (6, 7) stillsteht.

2. Vorrichtung nach Anspruch 1, **dadurch gekennzeichnet, dass** die Steuereinrichtungen dazu eingerichtet sind, das zweite Förderband (6, 7) anzuhalten, wenn sich die anderen zu verarbeitenden Feldfrüchte an den Verarbeitungsstationen (15) befinden, um zu ermöglichen, dass die anderen zu verarbeitenden Feldfrüchte an den Verarbeitungsstationen verarbeitet werden, während das zweite Förderband stillsteht.

3. Vorrichtung nach einem der vorhergehenden Ansprüche, **dadurch gekennzeichnet, dass** das erste und zweite Förderband direkt übereinander angeordnet sind.

4. Vorrichtung nach einem der vorhergehenden Ansprüche, **dadurch gekennzeichnet, dass** die Verarbeitungsstationen nur an einer Längsseite des ersten und zweiten Förderbands vorgesehen sind.

5. Vorrichtung nach einem der vorhergehenden Ansprüche, **dadurch gekennzeichnet, dass** die Vorrichtung mit einem Austragförderband (31, 32) versehen ist, das parallel zum ersten und zweiten Förderband verläuft, um Feldfrüchte abzuführen, die an den Verarbeitungsstationen verarbeitet wurden.

6. Vorrichtung nach einem der vorhergehenden Ansprüche, **dadurch gekennzeichnet, dass** jede Verarbeitungsstation mindestens eine Sammelstelle (35) aufweist, um verarbeitete Feldfrüchte an dieser Stelle zu sammeln.

7. Vorrichtung nach Anspruch 6, **dadurch gekennzeichnet, dass** in der Nähe von zumindest einigen der Sammelstellen und vorzugsweise in der Nähe jeder Sammelstelle Wiegeeinrichtungen vorgesehen sind, um an der jeweiligen Sammelstelle gesammelte, verarbeitete Feldfrüchte zu wiegen.

8. Vorrichtung nach einem der vorhergehenden Ansprüche, **dadurch gekennzeichnet, dass** jede Verarbeitungsstation mit einer Austragrutsche versehen ist, um Abfall nach unten auszuwerfen.

9. Vorrichtung nach einem der vorhergehenden Ansprüche, **dadurch gekennzeichnet, dass** Zuführeinrichtungen (51) vorgesehen sind, um geerntete, zu verarbeitende Feldfrüchte dem ersten Förderband oder zweiten Förderband zuzuführen.

10. Vorrichtung nach Anspruch 9, **dadurch gekennzeichnet, dass** die Zuführeinrichtungen Umschalteinrichtungen (52) umfassen, die in einer ersten Position eine Verbindung mit dem ersten Förderband (6, 7) und in einer zweiten Position eine Verbindung mit dem zweiten Förderband (6, 7) herstellen.

11. Verfahren zum Verarbeiten von geernteten Feldfrüchten, wie zum Beispiel Lauch, an Verarbeitungsstationen (15), beispielsweise unter Verwendung einer Vorrichtung nach einem der vorhergehenden Ansprüche, folgende Schritte umfassend:
A Transportieren der zu verarbeitenden Feldfrüchte vorbei an mehreren Verarbeitungsstationen (15) auf einer ersten vertikalen Höhenlage und Vorlegen der zu verarbeitenden Feldfrüchte an den Stationen mittels eines ersten Förderbandes (6, 7),
B Transportieren anderer zu verarbeitender Feldfrüchte vorbei an den mehreren Verarbeitungsstationen auf einer zweiten vertikalen Höhenlage, die sich von der ersten vertikalen Höhenlage unterscheidet, und Vorlegen der anderen zu verarbeitenden Feldfrüchte an den Stationen mittels eines zweiten Förderbandes,
wobei das Transportieren der zu verarbeitenden Feldfrüchte mittels des ersten Förderbandes (6, 7) gemäß Schritt A ausgeführt wird, während die anderen zu verarbeitenden Feldfrüchte, die an den mehreren Verarbeitungsstationen mittels des zweiten Förderbandes (6, 7) gemäß Schritt B vorgelegt werden, an den mehreren Verarbeitungsstationen (15) verarbeitet werden, und dass das Transportieren der anderen zu verarbeitenden Feldfrüchte mittels des zweiten Förderbandes (6, 7) gemäß Schritt B ausgeführt wird, während die zu verarbeitenden Feldfrüchte, die an den mehreren Verarbeitungsstationen mittels des ersten Förderbandes (6, 7) gemäß Schritt A vorgelegt werden, an den mehreren Verarbeitungsstationen (15) verarbeitet werden,
**dadurch gekennzeichnet, dass** das Verarbeiten von Feldfrüchten an den mehreren Verarbeitungsstationen (15) stattfindet, während das Förderband (6, 7) stillsteht, auf dem die zu verarbeitenden Feldfrüchte an den mehreren Verarbeitungsstationen vorgelegt werden.

12. Verfahren nach Anspruch 11, **dadurch gekennzeichnet, dass** abwechselnd alle Feldfrüchte auf dem ersten Förderband (6, 7) und alle Feldfrüchte auf dem zweiten Förderband (6, 7) an den mehreren Verarbeitungsstationen (15) verarbeitet werden.

13. Verfahren nach einem der Ansprüche 11 oder 12, **gekennzeichnet durch** das Sammeln verarbeiteter Feldfrüchte in einem Sammelbehälter (35) an jeder der Verarbeitungsstationen und das Versehen der Sammelbehälter mit einem Etikett, welches eine maschinenlesbare Information trägt, die sich zumindest auf die Kategorie der in dem Behälter vorhandenen Feldfrüchte und/oder die Bedienperson bezieht, die den Sammelbehälter mit verarbeiteten Feldfrüchten befüllt hat.

14. Verfahren nach Anspruch 13, **gekennzeichnet durch** das Abführen von Sammelbehältern (35), die an mehreren Verarbeitungsstationen (15) befüllt wurden, **durch** ein Austragförderband (32), wobei auf den Etiketten vorhandene Information **durch** ein automatisiertes Lesegerät während des Transports **durch** das Austragförderband ausgelesen wird, wobei die Information gespeichert wird.

## Revendications

1. Dispositif (1) permettant de traiter des cultures récoltées, telles que des poireaux (49), à des postes de traitement (15) pour des opérateurs humains, ledit dispositif comprenant un certain nombre de postes de traitement, un premier convoyeur (6, 7) entraîné par des premiers moyens d'entraînement destinés à transporter les récoltes devant être traitées par les opérateurs auxdits postes de traitement au-delà desdits postes de traitement à un premier niveau vertical, et des moyens de commande permettant de commander lesdits premiers moyens d'entraînement, dans lequel le dispositif comprend en outre un second convoyeur (6, 7) entraîné par des seconds moyens d'entraînement destinés à transporter d'autres récoltes devant être traitées aux postes de traitement au-delà desdits postes de traitement à un second niveau vertical différent dudit premier niveau vertical, alors que les moyens de commande sont également agencés pour commander les seconds moyens d'entraînement, **caractérisé en ce que** des premiers moyens de capteur et des seconds moyens de capteur sont disposés pour détecter la présence de cultures récoltées devant être traitées sur le premier convoyeur et le second convoyeur, respectivement, à l'emplacement des postes de traitement,
dans lequel les moyens de commande sont agencés pour entraîner et arrêter alternativement les premiers moyens d'entraînement et les seconds moyens d'entraînement,
dans lequel les moyens de commande sont agencés pour arrêter le premier convoyeur (6, 7) lorsque les récoltes devant être traitées sont au nombre de postes de traitement (15) permettant de traiter les récoltes devant être traitées aux postes de traitement (15) alors que le premier convoyeur (6, 7) est stationnaire.

2. Dispositif selon la revendication 1, **caractérisé en ce que** les moyens de commande sont agencés pour arrêter le second convoyeur (6, 7) lorsque les autres récoltes devant être traitées sont aux postes de traitement (15) pour permettre le traitement des autres récoltes devant être traitées aux postes de traitement alors que le second convoyeur est stationnaire.

3. Dispositif selon l'une quelconque des revendications précédentes, **caractérisé en ce que** ledit premier convoyeur et ledit second convoyeur sont disposés directement l'un au-dessus de l'autre.

4. Dispositif selon l'une quelconque des revendications précédentes, **caractérisé en ce que** les postes de traitement sont disposés seulement sur un côté longitudinal du premier convoyeur et du second convoyeur.

5. Dispositif selon l'une quelconque des revendications précédentes, **caractérisé en ce que** le dispositif est pourvu d'un convoyeur de déchargement (31, 32) s'étendant en parallèle au premier convoyeur et au second convoyeur permettant de décharger les récoltes traitées aux postes de traitement.

6. Dispositif selon l'une quelconque des revendications précédentes, **caractérisé en ce que** chaque poste de traitement comprend au moins un emplacement de collecte (35) destiné à collecter les cultures récoltées à cet emplacement.

7. Dispositif selon la revendication 6, **caractérisé en ce que** des moyens de pesée sont disposés près d'au moins certains des emplacements de collecte et de préférence près de chaque emplacement de collecte afin de peser les cultures récoltées collectées à l'emplacement de collecte respectif.

8. Dispositif selon l'une quelconque des revendications précédentes, **caractérisé en ce que** chaque poste de traitement est pourvu d'une goulotte de déchargement permettant de décharger les déchets vers le bas.

9. Dispositif selon l'une quelconque des revendications précédentes, **caractérisé en ce que** des moyens d'alimentation (51) sont disposés pour alimenter le premier convoyeur ou le second convoyeur (6, 7) en cultures récoltées devant être traitées.

10. Dispositif selon la revendication 9, **caractérisé en ce que** lesdits moyens d'alimentation comprennent des moyens d'échange (52) qui se connectent au premier convoyeur (6, 7) dans une première position et au second convoyeur (6, 7) dans une seconde position.

11. Procédé de traitement de cultures récoltées, telles que des poireaux, à des postes de traitement (15) par exemple à l'aide d'un dispositif selon l'une quelconque des revendications précédentes, comprenant les étapes consistant à :
A. transporter les récoltes devant être traitées au-delà d'un certain nombre de postes de traitement (15) à un premier niveau vertical, et présenter lesdites récoltes devant être traitées auxdits postes au moyen d'un premier convoyeur (6, 7),
B. transporter d'autres récoltes devant être traitées au-delà dudit nombre de postes de traitement à un second niveau vertical différent dudit premier niveau vertical et présenter les autres récoltes devant être traitées auxdits postes au moyen d'un second convoyeur,
dans lequel le transport des récoltes devant être traitées est réalisé au moyen du premier convoyeur (6, 7) selon l'étape A alors que les autres récoltes devant être traitées, qui sont présentées audit nombre de postes de traitement au moyen du second convoyeur (6, 7) selon l'étape B, sont traitées audit nombre de postes de traitement (15), et dans lequel le transport des autres récoltes devant être traitées est réalisé au moyen du second convoyeur (6, 7) selon l'étape B alors que les récoltes devant être traitées, qui sont présentées audit nombre de postes de traitement au moyen du premier convoyeur (6, 7) selon l'étape A, sont traitées audit nombre de postes de traitement,
**caractérisé en ce que** le traitement des récoltes audit nombre de postes de traitement (15) a lieu alors que le convoyeur (6, 7) sur lequel les récoltes devant être traitées sont présentées audit nombre de postes de traitement est stationnaire.

12. Procédé selon la revendication 11, **caractérisé en ce que**, alternativement, toutes les récoltes sur le premier convoyeur (6, 7) et toutes les récoltes sur le second convoyeur (6, 7) sont traitées audit nombre de postes de traitement (15).

13. Procédé selon l'une quelconque des revendications 11 et 12, **caractérisé par** les étapes consistant à collecter les récoltes traitées dans un conteneur de collecte (35) au niveau de chaque poste de traitement et fournir aux conteneurs de collecte une étiquette comportant des informations lisibles par machine relatives au moins à la variété des récoltes présentes dans le conteneur et/ou l'opérateur humain qui remplit le conteneur de collecte avec les récoltes traitées.

14. Procédé selon la revendication 13, **caractérisé par** l'étape consistant à décharger les conteneurs de collecte (35) qui ont été remplis à un nombre de postes de traitement (15) par un convoyeur de déchargement (32), dans lequel les informations sur une étiquette sont lues par un lecteur automatique pendant le transport par le convoyeur de déchargement, lesquelles informations sont stockées.
